(19) Europäisches Patentamt
European Patent Office
Office européen des brevets

(11) **EP 4 654 029 A1**

(12) **EUROPEAN PATENT APPLICATION**

(43) Date of publication:
**26.11.2025 Bulletin 2025/48**

(21) Application number: **25177921.1**

(22) Date of filing: **21.05.2025**

(51) International Patent Classification (IPC):
**G06F 12/0862** (2016.01)   **G06F 12/0897** (2016.01)
**G06F 12/1009** (2016.01)   **G06F 12/1027** (2016.01)

(52) Cooperative Patent Classification (CPC):
**G06F 12/1027; G06F 12/0862; G06F 12/0897;
G06F 12/1009;** G06F 2212/654; G06F 2212/681;
G06F 2212/684

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024  US 202418671357**

(71) Applicant: **Google LLC
Mountain View, CA 94043 (US)**

(72) Inventors:
• **Kennelly, Christopher Thomas
Mountain View, California 94043 (US)**
• **Jain, Akanksha
Mountain View, California 94043 (US)**

(74) Representative: **Betten & Resch
Patent- und Rechtsanwälte PartGmbB
Maximiliansplatz 14
80333 München (DE)**

(54) **PREFETCH FOR TRANSLATION LOOKASIDE BUFFER (TLB)**

(57)    A software-based extension of the instruction set of a processor includes instructions for the processor to prefetch virtual address translations and insert the prefetched translations into a translation lookaside buffer (TLB). A page walk may be performed to find a virtual address in a group of page tables and provide the address translation to the TLB. The TLB may be arranged in multiple levels and the instructions may specify a level for the prefetched entry to be inserted. The instruction may provide a hint to the processor for selecting candidate virtual address for prefetch based on a characteristic of an address such as a likelihood of reuse, a priority level of the data in the virtual address or other characteristic. A page walk can be performed asynchronously without affecting normal operations of a program. Instructions may specify between an instruction a data TLB for insertion of a new TLB entry.

FIG. 3

EP 4 654 029 A1

## Description

BACKGROUND

Computer processors executing virtual applications translate virtual memory locations to physical locations in the computer memory. To speed processing of virtual applications, processors maintain a cache of memory location translations in a translation lookaside buffer (TLB). If the processor attempts to retrieve a physical memory address corresponding to a virtual application and the page location is not found in the TLB increased processing must be performed to resolve the translation, reducing the processor's efficiency, and increasing the time required to perform operational processing.

BRIEF SUMMARY

Data processing architectures utilize a translation lookaside buffer (TLB) for storing information recently used for translating virtual memory addresses to physical memory addresses. When a processing unit receives an instruction for a memory operation, the processor refers to the TLB to determine the physical address containing the data required to perform the requested task. When the TLB contains the requested address translation a TLB hit occurs. However, if the TLB does not contain the requested virtual address, then a resource intensive search of the page tables must be performed to locate the virtual address and its corresponding physical address referred to as a page walk. Page walks require multiple memory accesses and hold up the completion of tasks scheduled with the processor, resulting in slower processing times and increased resource utilization.

The disclosed technology extends the instruction set in an instruction set architecture (ISA) process to include a prefetch instruction directed to the TLB. This process does not affect program behavior and provides a hint for selecting candidate memory addresses to prefetch and populate the TLB. The programmer can leverage knowledge of the program's operation for overlapping a prefetch instruction with a useful computation before the memory access is needed. The extended instruction may include a first instance for prefetching to an instruction TLB (iTLB) and/or a second instance for prefetching to a data TLB (dTLB).

Processing architectures may include multi-level or tiered TLB structures. The TLB prefetch instruction can include an operand '<level>' for providing a preference for which level of TLB the prefetched data should be inserted. A lower level TLB will typically be smaller and therefore faster than a higher level, which is generally larger and slower. A decision to target a specific TLB level may be selected dependent on a likelihood that the prefetched data will be utilized, or based on timeliness required to access and process a particular type of data.

According to implementation, a software-based extension of the instruction set of a processor includes instructions for the processor to prefetch virtual address translations and insert the prefetched translations into a translation lookaside buffer (TLB). A page walk may be performed to find a virtual address in a group of page tables and provide the address translation to the TLB. The TLB may be arranged in multiple levels and the instructions may specify a level for the prefetched entry to be inserted. The instruction may provide a hint to the processor for selecting candidate virtual address for prefetch based on a characteristic of an address such as a likelihood of reuse, a priority level of the data in the virtual address or other characteristic. A page walk can be performed asynchronously without affecting normal operations of a program. Instructions may specify between an instruction a data TLB for insertion of a new TLB entry.

BRIEF DESCRIPTION OF THE DRAWINGS

FIG. 1 is a block diagram of compute processing architecture according to aspects of the disclosure.
FIG. 2 is a block diagram of a translation lookaside buffer according to aspects of the disclosure.
FIG. 3 is a block diagram of the translation lookaside buffer of FIG. 2 with TLB prefetch according to aspects of the disclosure.
FIG. 4 is a process flow diagram of a method for prefetching data in a translation lookaside buffer according to aspects of the disclosure.
FIG. 5 is a block diagram of a computing system for implementing prefetching in TLBs according to aspects of this disclosure.

DETAILED DESCRIPTION

Compute systems use virtual memory to leverage software and hardware to extend processing capabilities beyond physical limitations of memory by transferring data from RAM to long-term storage devices, such as disk storage devices. To accomplish this, the system must maintain mappings from addresses assigned in virtual memory to a corresponding address in physical memory. To speed processing, a processor in communication with a memory management unit (MMU) maintains a quick-access list of translations from virtual addresses to physical addresses, which allows the processor to respond to data read or write requests by mapping a virtual address to a physical address and properly performing data accesses to support software processing and operating system (OS) processing. This list of translations is maintained in a translation lookup buffer (TLB) that is maintained by the MMU. When a processor gets a memory access request the processor queries the TLB for the virtual address of the request. If the address is not currently in the TLB, the MMU must perform a further search to get the address translation. This process requires multiple memory accesses, and results in wasted processing cycles of the processor causing latency and delays. TLB misses may result in a processor spending substantial portions of compute cycles resolving TLB misses. By way of example, a processor may spend up to about 20% of processing cycles to resolve TLB misses.

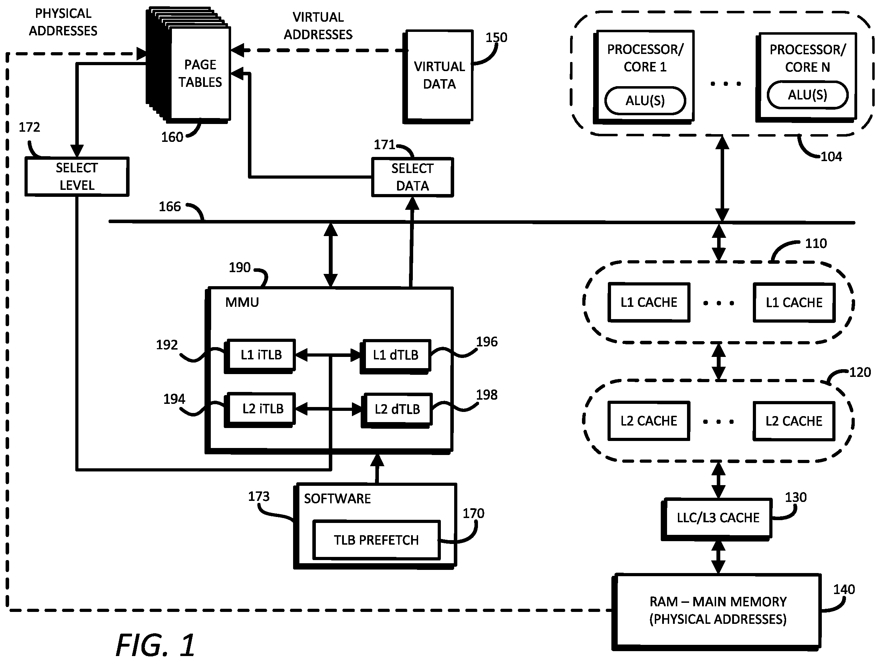

FIG. 1 is a block diagram of a compute system using virtual memory. Processor 104 may comprise a number of processor cores 1-N including arithmetic logical unit (ALU) for performing processing. Processor 104 may utilize virtual memory to process virtual data 150. Virtual data 150 is assigned virtual addresses that are referenced by processor 104. The data in virtual data 150 has a corresponding physical address for storing the associated data in physical memory. The physical address may refer to space in main memory 140. The processing system may maintain a cache system for temporarily storing data from main memory 140. The cache storage may be arranged in levels, with a lowest level L1 cache 110, a second layer L2 cache 120 arranged between L1 cache 110 and last level cache LLC or L3 cache 130 in communication with main memory 140.

Processor 104 communicates with cache and other components through communication bus 166. MMU 190 manages a first instruction TLB (iTLB) 192, 194 and a second data TLB (dTLB) 196, 198 via communication bus 166. iTLB 192, 194 may be arranged in multiple layers including a first layer L1 192 and a second layer L2 194. Similarly, dTLB 196, 198 may be arranged in a multi-layer structure having first layer L1 196 and second layer L2 198. Level 1 TLBs 192, 196 are typically smaller than their corresponding level 2 TLB 194, 198. For this reason, lower level TLBs process faster than higher level TLBs. A lower level TLB may be specified to store translation entries that are of high priority or contain translations associated with a high level of reuse by processor 104.

When processor 104 queries the TLB for a virtual address translation and the address is not contained one of the TLBs, a TLB miss occurs. A TLB miss requires the resolving of the virtual address to a physical address by consulting page tables 160 corresponding to the virtual addresses used in virtual data 150 and their corresponding physical addresses from main memory 140. The page tables 160 are sequentially searched one by one, by a page walker implemented in the MMU 190. The page walker must make multiple memory accesses as it reads the page tables 160 searching for a virtual address.

The operation of processor 104 improves when a requested virtual address resides in the TLB for quick reference. While some processor architectures, such as Instruction Set Architecture (ISA) may contain mechanisms for prefetching data to cache 110, 120, 130. they typically do not address prefetching for the TLB 192-198.

While some hardware-based approaches for prefetching data to the TLB have been proposed, the disclosed technology as shown in FIG. 1 uses a software-based approach to extend an instruction set of the processor 104, providing guiding hints for optimizing the selection and placement of data in the TLB.

Software 173 includes instructions that are executable by processor 104. Software 173 can include instructions that allow processor 104 to communicate with MMU 190 to effectuate prefetching of data to the TLBs 192-198. Software 173 includes commands to perform a TLB prefetch 170. Instructions can be provided to the MMU 190 via processor 104. TLB prefetch 170 can provide hints or parameters further assisting the selection of data 171 from the page tables 160. Data selection 171 may be directed to virtual addresses that are expected to be referenced in the near future. TLB prefetch 170 may further provide information to MMU 190 for selecting a location 172 for a prefetched TLB entry. For example, TLB prefetch 170 may provide information to assist MMU 190 in selecting a TLB level to contain the prefetched entry. An entry deemed more likely or cacheable, may be designated for L1 TLB 192, 196, while an entry deemed less likely to be reused may be placed in a higher level TLB such as L2 194, 198.

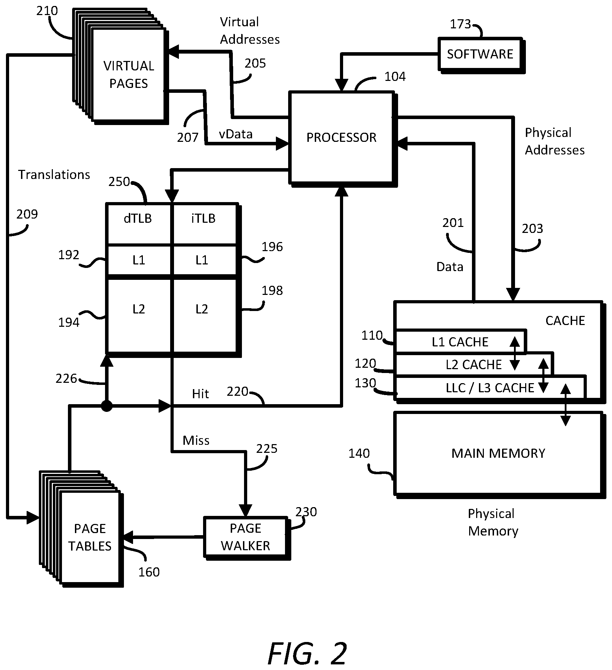

Referring now to FIG. 2, a functional block diagram is provided that illustrates the operation of a TLB according to aspects of the present disclosure. Processor 104 receives instructions in the form of software 173. Software 173 instructs processor 104 how to access data and process the data according to the instructions. Data 201 can be accessed by processor 104 and stored in main memory 140. Main memory 140 may be in the form of RAM in communication with the processor 104. Processor 104 further communicates with cache memories, L1 110, L2 120 and LLC 130 that store more frequently used data for faster access by processor 104 than by accessing data from main memory 140. Lower level cache such as L1 cache 110 is smaller than the next higher level cache (L2 120) and therefore provides faster access at lower cache levels to processor 104. When processor 104 attempts to access data, processor 104 first queries the lowest level cache 110 to determine if the data is cached at that level. If the data is not present in L1 110, then the processor moves to the next level cache L2 120 and queries L2 cache 120 for the requested data. Processor 104 sequentially queries each level of cache. If the data is not found at any cache level, the data must be retrieved from main memory 140. Cache 110, 120, 130 and main memory 140 reference data through physical addresses 203. When requesting data access, processor 104 provides the physical address 203 to physical memory, which uses the physical address 203 to locate and retrieve data 201 which is communicated to processor 104.

Processor 104 can further process data through virtual memory 210. Virtual memory 210 is arranged in virtual pages. Each virtual page contains a range of virtual addresses and associated virtual data. Each virtual address corresponds to a physical address in physical memory 140. The translations 209 that map a virtual address to its corresponding physical address are stored in page tables 160.

While processing from virtual memory 210, processor 104 may receive a request to retrieve data or instructions from memory to continue processing. Processor 104 will look to the TLB 250 to determine if the requested virtual address is currently contained in the TLB 250 for rapidly translating the virtual address to a physical address. The TLB 250 may be arranged is separate TLBs containing instructions and data. iTLB contains instructions and may be further configured as a multi-level iTLB including a level 1 L1 196 iTLB and a second level L2 198 iTLB. Similarly, the dTLB contains data references and includes a lower level L1 192 dTLB and a higher level L2 194 dTLB. Similar to cache storage in the physical memory, lower level TLB 192, 196 is smaller and faster than a higher level (L2) TLB 194, 198. Accordingly, entries stored in the TLB 250 may be arranged by TLB level to include entries that are more likely to be reused to be stored in lower level TLB 192, 196 where the entries are accessed more quickly that higher level TLBs 194 198. The system will select entries relying on a confidence level or certainty that the entry will be accessed in the near future. When a new entry is placed in the TLB another entry is ejected to make space. It is possible that an entry that is selected for insertion may eject another entry that was needed. For this reason, the confidence level that a selected entry will be used can be used to decide which level TLB will receive the entry. Entries with high confidence will be placed in L1 TLB while a lower confidence entry can be inserted into L2 TLB. This manages the risk and opportunity costs of ejecting a valuable entry at the expense of a less valuable insertion. By selectively loading entries into the TLB 250 at specific levels, the operation of processor 104 is improved by conserving processing cycles for tasks other than resolving virtual address translations.

In operation, processor 104 references TLB 250 when a virtual memory access request is received. Initially, L1 TLB 192, 196 is queried, followed by higher level TLBs, (e.g., L2 194, 198). If the requested virtual address is found, a hit occurs and the corresponding physical address is provided 220 to processor 104. Processor 104 may the provide the physical address 203 to physical memory 140 and receive the required data 201 in return. On the other hand, if the requested virtual address is not contained in the TLB 250, a miss occurs 225. In this case, the virtual address is provided to page walker 230, which systematically goes through each of the page tables 160 to find the requested virtual address. The virtual address is found within the page tables 160 and the associated translation is stored 226 to the TLB 250 and provided back 220 to the processor 104.

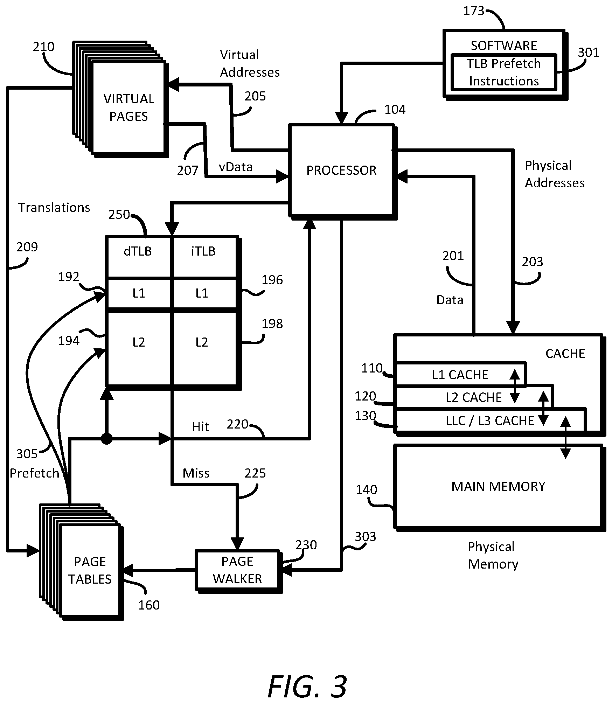

Referring now to FIG. 3, the processing system using TLBs described in FIG. 2 is extended to include prefetching data entries to the TLB according to aspects of the disclosed technology. Software 173 includes instructions that are executable by processor 104, the instructions include TLB prefetch instructions 301 that instruct processor 104 to prefetch selectable address translations and anticipatorily retrieve those translations for storage as entries in the TLB 250.

Processor 104 may utilize page walker 230 by requesting a page walk to occur asynchronously 303 with ongoing processing by the processor 104. Page walker 230 searches page tables 160 for address translations selected based on criteria specified or hinted at by prefetch instructions 301. The selected translations are then inserted 305 into the TLB 250. When a multi-level TLB 250 is used, prefetch instructions 301 can also include information instructing which TLB level the entry should be inserted. The selected criteria are provided in the software TLB prefetch instructions 301 and serve to optimally pre-select virtual addresses which are expected to be reused in the near future. Based on the likelihood of reuse, the addresses are selected and inserted 305 to a position in the TLB 250 that is commensurate with the probability that the address will be referenced in the near future by processor 104. TLB prefetch instructions 301may be utilized to extend the prefetch capabilities of an architecture, such as ISA providing prefetch instructions for each of the instruction and data TLBs.

For example, the following two instructions may be provided via software execution to provide prefetching TLB entries. A separate command is provided for the instruction TLB and the data TLB and provide selectable parameters for guiding the selection and placement of prefetched TLB entries.

$$\textit{prefetchitlb} <addr> || <level> || <hint>$$

$$\textit{prefetchdtlb} <addr> || <level> || <hint>$$

In the first instruction, the prefetch instruction is directed toward the iTLB and will instruct the processor to perform a page walk to find an iTLB entry to be inserted into the iTLB. Parameters *<addr>* and *<level>* refer to the virtual address, and iTLB level, respectively and specify the data and location where the prefetched entry should be stored in the iTLB. Optionally, a third parameter *<hint>* may be provided for further information relating to the nature of the prefetched entry. This further information may be related to the likelihood of reuse, the cachebility of the entry, or other factors relating to the page corresponding to the prefetched TLB entry.

Similarly, the second instruction provides the same utility directed toward the dTLB and may be utilized to prefetch dTLB entries corresponding to virtual addresses containing data values. dTLB entries may be selectively prefetched and placed into appropriate levels of the dTLB using the command and its associated parameter values.

The instructions are provided as a hint to the TLB management process and do not affect normal program behavior. Completing the page table walk may be performed asynchronously according to one aspect of the described technology. Typical prefetch processes may contribute significant costs because the page table walk blocks retirement of the instruction. This is a profiling artifact, but it distracts from the execution costs after malloc returns. Selectable TLB prefetching improves operation of the compute system by performing page walks outside the scope of normal program processing.

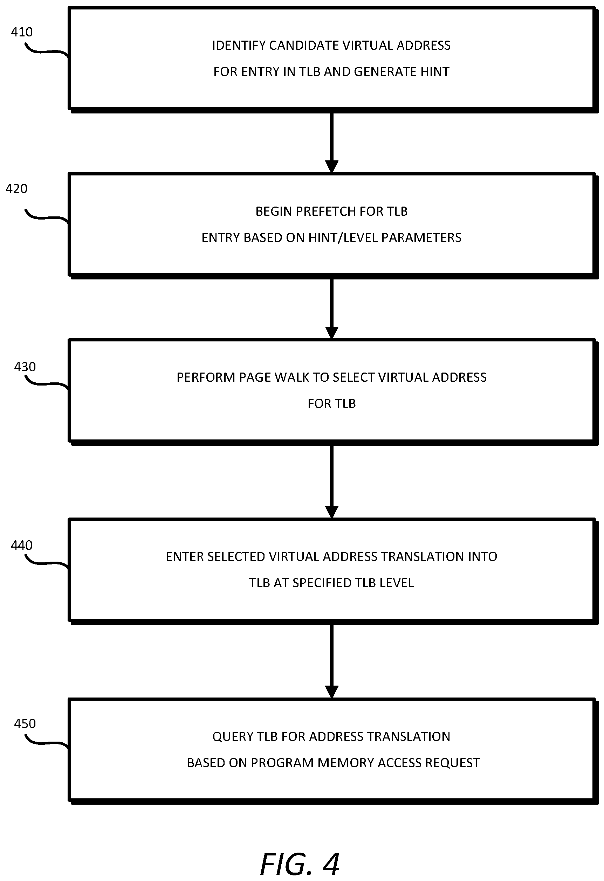

FIG. 4 is a process flow diagram for prefetching entries for a TLB according to aspects of the disclosed technology. At 410, a candidate entry for the TLB is selected and a hint is generated for inclusion in a TLB prefetch command. The process of prefetching the TLB entry begins based on the supplied parameters, such as a hint, a specified TLB level, or the virtual address associated with the TLB entry to be prefetched 420. A page walk is performed to find and select the virtual address provided in the prefetch command, and the translation is retrieved from the page tables and inserted into the TLB 430. The page walk may be performed asynchronously with other processing to prevent delays associated with the completion of the page walk. The retrieved address translation is then inserted as an entry to the specified TLB and at the specified TLB level 440. When a memory access request is made to the processor, the TLB is queried for the desired virtual address translation 450. If the proper TLB entries have been prefetched, the query will result in a hit, providing improved performance of the processor by not requiring the resolution of a TLB miss.

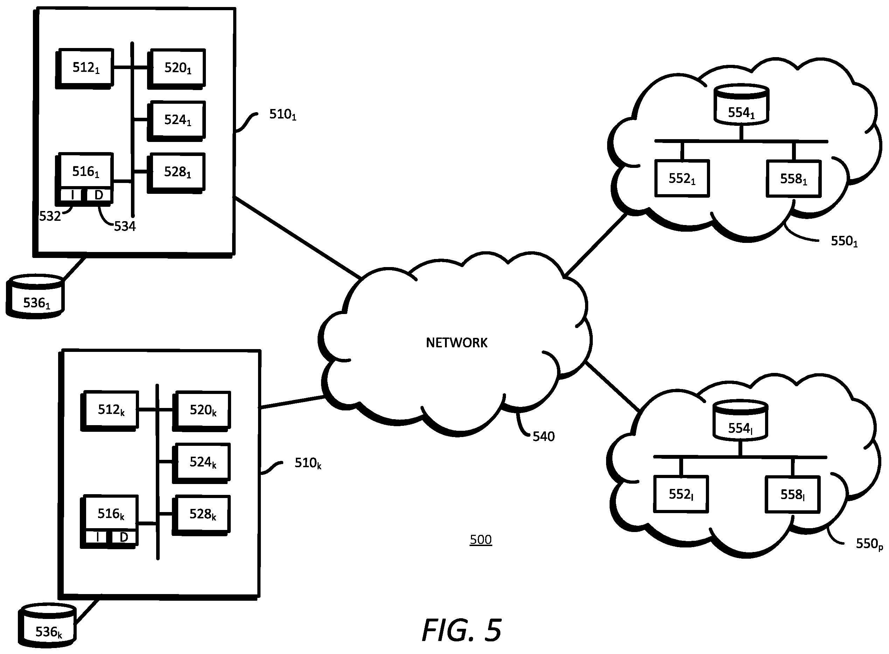

Computing devices described herein may comprise one or more of the computing devices depicted in system 500 of FIG. 5. System 500 includes one or more computing devices 510, which may comprise computing devices $510_I$ through $510_k$, storage 536, a network 540 and one or more cloud computing systems 550, which may comprise cloud computing systems $550_I$ through $550_p$. Computing devices 510 may comprise computing devices located at a customer location that makes use of cloud computing services such as Infrastructure as a Service (IaaS), Platform as a Service (PaaS), and/or Software as a Service (SaaS). For example, if a computing device 510 is located at a business enterprise, computing device 510 may use cloud systems 550 as a service that provides software applications (e.g., accounting, word processing, inventory tracking, etc., applications) to computing devices 510 used in operating enterprise systems. In addition, computing device 510 may access cloud computing systems 550 as part of its operations that employ machine learning, or more generally artificial intelligence technology, to train applications that support its business enterprise. For example, computing device 510 may comprise a customer computer or server in a bank or credit card issuer that accumulates data relating to credit card use by its card holders and supplies the data to a cloud platform provider, who then processes that data to detect use patterns that may be used to update a fraud detection model or system, which may then notify the card holder of suspicious or unusual activity with respect to the card holder's credit. Other customers may include social media platform providers, government agencies, or any other business that uses machine learning as part of its operations.

As shown in FIG. 5, each of the computing devices 510 may include one or more processors 512, memory 516 storing data 534 and instructions 532, display 520, communication interface 524 and input system 528. The processors 512 and memories 516 may be communicatively coupled as shown in FIG. 5 and include memory management units, translation lookaside buffers, and processors as described above. Computing device 510 may also be coupled or connected to storage 536, which may comprise local or remote storage, e.g., on a Storage Area Network (SAN), that stores data accumulated as part of a customer's operation. Computing device 510 may comprise a standalone computer (e.g., desktop or laptop) or a server associated with a customer. A given customer may also implement as part of its business multiple computing devices as servers. Memory 516 stores information accessible by the one or more processors 512, including instructions 532 and data 534 that may be executed or otherwise used by the processor(s) 512. The memory 516 may be of any type capable of storing information accessible by the processor, including a computing device-readable medium, or other medium that stores data that may be read with the aid of an electronic device, such as a hard drive, memory card, ROM, RAM, DVD, or other optical disks, as well as other write-capable and read-only memories. Systems and methods may include different combinations of the foregoing, whereby different portions of the instructions and data are stored on different types of media.

The instructions 532 may be any set of instructions to be executed directly (such as machine code) or indirectly (such as scripts) by the processor 512. For example, the instructions may be stored as computing device code on the computing device-readable medium. In that regard, the terms "instructions" and "programs" may be used interchangeably herein. The instructions may be stored in object code format for direct processing by the processor, or in any other computing device language, including scripts or collections of independent source code modules that are interpreted on demand or compiled in advance. Processes, functions, methods, and routines of the instructions are explained in more detail below.

The data 534 may be retrieved, stored, or modified by processor 512 in accordance with the instructions 532. As an example, data 534 associated with memory 516 may comprise data used in supporting services for one or more client devices, applications, etc. Such data may include data to support hosting web-based applications, file share services, communication services, gaming, sharing video or audio files, or any other network-based services.

The one or more processors 512 may be any conventional processor, such as commercially available CPUs. Alternatively, the one or more processors may be a dedicated device such as an ASIC, e.g., a tensor processing unit (TPU), or other hardware-based processor. The processor, memory, and other elements of computing device 510 may be arranged within a single block, but it will be understood the one of ordinary skill in the art that the processor, computing device, or memory may actually include multiple processors, computing devices, or memories that may or may not be located or stored within the same physical housing. In one example, one or more computing devices 510 may include one or more server computing devices having a plurality of computing devices (e.g., a load-balanced server farm) that exchange information with different nodes of a network for the purpose of receiving, processing and transmitting the data to and from other computing devices as part of the customer's business operation.

Computing device 510 may also include a display 520 (e.g., a monitor having a screen, a touchscreen, a projector, a television, or other device that is operable to display information) that provides a user interface that allows for controlling the computing device 510. Such control may include, for example, using a computing device to cause data to be uploaded through input system 528 to cloud system 550 for processing, causing accumulation of data on storage 536 or more generally, managing different aspects of a customer's computing system. While input system 528 may be used to upload data, e.g., a USB port, computing system 500 may also include a mouse, keyboard, touchscreen, or microphone that can be used to receive commands and/or data.

The network 540 may include various configurations and protocols including short range communication protocols such as Bluetooth™, Bluetooth™ LE, the Internet, World Wide Web, intranets, virtual private networks, wide area networks, local networks, private networks using communication protocols proprietary to one or more companies, Ethernet, WiFi, HTTP, etc., and various combinations of the foregoing. Such communication may be facilitated by any device capable of transmitting data to and from other computing devices, such as modems and wireless interfaces. Computing device 510 interfaces with network 540 through communication interface 524, which may include the hardware, drivers, and software necessary to support a given communication protocol.

Cloud computing system 550 may comprise one or more data centers that may be linked via high-speed communications or computing networks. A given data center within system 550 may comprise dedicated space within a building that houses computing systems and their associated components, e.g. storage systems and communications systems. Typically, a data center will include racks of communications equipment, server-/hosts, and disks. The servers/hosts and disks comprise physical computing resources that are used to provide virtual computing resources such as VMs. To the extent that a given cloud computing system includes more than one data center, those data centers may be at different geographic locations within relatively close proximity to each other, chosen to deliver services in a timely and economically efficient manner, as well as provide redundancy and maintain high availability. Similarly, different cloud computing systems are typically provided at different geographic locations.

As shown in FIG. 5, computing system 550 may be illustrated as comprising infrastructure 552, storage 554, and computer system 558. Infrastructure 552, storage 554, and computer system 558 may comprise a data center within a cloud computing system 550. Infrastructure 552 may comprise servers, switches, physical links (e.g., fiber) and other equipment used to interconnect servers within a data center with storage 554 and computer system 558. The servers may be equipped with the components that make up computing device 510. Storage 554 may comprise a disk or other storage device that is partitionable to provide physical or virtual storage to virtual machines running on processing devices within a data center. Storage 554 or in a different data center that does not share a physical location with the virtual machines it supports. Computer system 558 acts as supervisor or managing agent for jobs being processed by a given data center. In general, computer system 558 will contain the instructions necessary to, for example, manage the operations requested as port of a synchronous training operation on customer data. Computer system 558 may receive jobs, for example, as a result of input received via an application programming interface (API) from a customer.

The disclosed technology may be perceived through various features including:

Feature 1 includes a system comprising a processing unit, a memory in communication with the processing unit, a transfer lookaside buffer (TLB) in communication with the processing unit, the TLB storing translations of one or more virtual addresses to a corresponding physical address, and instructions executable by the processing unit that cause the processing unit to identify a virtual address translation and populate the TLB with a translation of the identified virtual address.

Feature 2 includes the system of feature 1, comprising a plurality of TLBs including a level 1 (L1) TLB and a level 2 (L2) TLB.

Feature 3 includes any of the features 1-2, comprising a first instruction TLB (iTLB) for storing virtual memory addresses corresponding to instructions and a second data TLB (dTLB) for storing virtual memory addresses corresponding to data.

Feature 4 includes the system of any of features 1-3, wherein the instructions comprise at least one level parameter, the at least one parameter selected from a hint operand and a level.

Feature 5 includes the system of features 1-4, wherein the level parameter refers to level of the TLB.

Feature 6 includes the system of any of features 1-5, wherein the hint operand refers to a likelihood that the identified virtual address will be accessed within a short period of time.

Feature 7 includes the system of any of features 1-6, wherein the L1 TLB is smaller than the L2 TLB.

Feature 8 includes the system of any of features 1-7, wherein a virtual address more likely to be accessed within a short period of time is inserted in the L1 TLB, and a virtual address less likely to be accessed within a short period of time is inserted in the L2 TLB.

Feature 9 includes any the system of any of features 1-8 wherein the instructions cause the processing unit, upon receiving a virtual memory access request to provide a command to a memory management unit (MMU), the MMU controlling the TLB and query by the MMU, the TLB for a corresponding virtual memory address and if the virtual memory address is found in the TLB, translating the virtual memory address into a corresponding physical memory address.

Feature 10 includes a method for populating a translation lookaside buffer (TLB) comprising identifying, in a processing unit, a candidate virtual memory address for inserting in the TLB, prefetching, in the processing unit, a virtual memory address based on the identified candidate virtual memory address and inserting the prefetched virtual memory address in the TLB.

Feature 11 includes the method of feature 10, further comprising populating a plurality of TLBs based on a characteristic of the prefetched virtual memory address.

Feature 12 includes the method of any of features 10-11, wherein prefetching the virtual memory address comprises performing a prefetch instruction in the processing unit.

Feature 13 includes the method of any of features 10-12, wherein the instruction is included in an instruction set architecture (ISA) processor.

Feature 14 includes the method of any of features 10-13, wherein the TLB further comprises a level 1 (L1) TLB and a level 2 (L2) TLB.

Feature 15 includes the method of any of features 10-14, wherein the TLB further comprises a first instruction TLB (iTLB) for storing virtual memory addresses corresponding to instructions and a second data TLB (dTLB) for storing virtual memory addresses corresponding to data.

Feature 16 includes the method of any of features 10-15, wherein the instructions comprise at least one level parameter, the at least one parameter selected from a hint operand and a TLB level.

Feature 17 includes the method of any of features 10-16, wherein the level parameter refers to a level of the TLB.

Feature 18 includes the method of any of features 10-17, wherein the hint operand refers to a likelihood that the identified virtual address will be accessed within a short period of time.

Feature 19 includes the method of any of features 10-18, wherein the L1 TLB is smaller than the L2 TLB.

Feature 20 includes a non-transitory computer-readable medium product storing instructions executable by a processor, the instructions when executed by the processor cause the processor to provide a command to a memory management unit (MMU) to determine a translation of a virtual memory address provided with the command to a physical memory address and insert the determined translation into a translation lookup buffer (TLB) of the MMU, wherein the virtual memory address is selected based on a hint parameter of the command.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A system comprising:

   a processing unit;
   a memory in communication with the processing unit;
   a transfer lookaside buffer (TLB) in communication with the processing unit, the TLB storing translations of one or more virtual addresses to a corresponding physical address; and
   instructions executable by the processing unit that cause the processing unit to identify a virtual address translation and populate the TLB with a translation of the identified virtual address.

2. The system of Claim 1, comprising a plurality of TLBs including a level 1 (L1) TLB and a level 2 (L2) TLB.

3. The system of Claim 2, comprising a first instruction TLB (iTLB) for storing virtual memory addresses corresponding to instructions and a second data TLB (dTLB) for storing virtual memory addresses corresponding to data.

**4.** The system of any one of Claims 1 to 3, wherein the instructions comprise at least one level parameter, the at least one parameter selected from a hint operand and a level.

**5.** The system of Claim 4, wherein the level parameter refers to level of the TLB; and/or
wherein the hint operand refers to a likelihood that the identified virtual address will be accessed within a short period of time.

**6.** The system of Claim 5, wherein the L1 TLB is smaller than the L2 TLB.

**7.** The system of Claim 6, wherein a virtual address more likely to be accessed within a short period of time is inserted in the L1 TLB, and a virtual address less likely to be accessed within a short period of time is inserted in the L2 TLB.

**8.** The system of any one of Claims 1 to 7, wherein the instructions cause the processing unit, upon receiving a virtual memory access request to:

provide a command to a memory management unit (MMU), the MMU controlling the TLB and query by the MMU, the TLB for a corresponding virtual memory address and if the virtual memory address is found in the TLB, translating the virtual memory address into a corresponding physical memory address.

**9.** A method for populating a translation lookaside buffer (TLB) comprising:

identifying, in a processing unit, a candidate virtual memory address for inserting in the TLB;
prefetching, in the processing unit, a virtual memory address based on the identified candidate virtual memory address; and
inserting the prefetched virtual memory address in the TLB.

**10.** The method of Claim 9, further comprising:
populating a plurality of TLBs based on a characteristic of the prefetched virtual memory address.

**11.** The method of Claim 9 or Claim 10, wherein prefetching the virtual memory address comprises performing a prefetch instruction in the processing unit; and
wherein optionally the instruction is included in an instruction set architecture (ISA) processor.

**12.** The method of any one of Claims 9 to 11, wherein the TLB further comprises a level 1 (L1) TLB and a level 2 (L2) TLB; and/or
wherein the TLB further comprises a first instruction TLB (iTLB) for storing virtual memory addresses corresponding to instructions and a second data TLB (dTLB) for storing virtual memory addresses corresponding to data.

**13.** The method of any one of Claims 9 to 12, wherein the instructions comprise at least one level parameter, the at least one parameter selected from a hint operand and a TLB level; and

wherein optionally the level parameter refers to a level of the TLB; and/or
wherein the hint operand refers to a likelihood that the identified virtual address will be accessed within a short period of time.

**14.** The method of Claim 12, wherein the L1 TLB is smaller than the L2 TLB.

**15.** A non-transitory computer-readable medium product storing instructions executable by a processor, the instructions when executed by the processor cause the processor to:
provide a command to a memory management unit (MMU) to determine a translation of a virtual memory address provided with the command to a physical memory address and insert the determined translation into a translation lookup buffer (TLB) of the MMU, wherein the virtual memory address is selected based on a hint parameter of the command.

FIG. 1

*FIG. 2*

*FIG. 3*

410 — IDENTIFY CANDIDATE VIRTUAL ADDRESS
FOR ENTRY IN TLB AND GENERATE HINT

420 — BEGIN PREFETCH FOR TLB
ENTRY BASED ON HINT/LEVEL PARAMETERS

430 — PERFORM PAGE WALK TO SELECT VIRTUAL ADDRESS
FOR TLB

440 — ENTER SELECTED VIRTUAL ADDRESS TRANSLATION INTO
TLB AT SPECIFIED TLB LEVEL

450 — QUERY TLB FOR ADDRESS TRANSLATION
BASED ON PROGRAM MEMORY ACCESS REQUEST

*FIG. 4*

FIG. 5

EP 4 654 029 A1

**EP 4 654 029 A1**

EUROPEAN SEARCH REPORT

Application Number

EP 25 17 7921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/342134 A1 (YASIN AHMAD [IL] ET AL) 4 November 2021 (2021-11-04) * paragraph [0016] - paragraph [0027]; figures 1B-9 * * paragraph [0059] - paragraph [0075] * ----- | 1-15 | INV. G06F12/0862 G06F12/0897 G06F12/1009 G06F12/1027 |
| A | WO 2024/030707 A1 (QUALCOMM INC [US]) 8 February 2024 (2024-02-08) * paragraph [0017] - paragraph [0032] * ----- | 1-15 | |
| A | EP 2 972 896 B1 (INTEL CORP [US]) 2 May 2018 (2018-05-02) * paragraph [0019] - paragraph [0040] * ----- | 1-15 | |

TECHNICAL FIELDS SEARCHED (IPC)

G06F

The present search report has been drawn up for all claims

| Place of search | Date of completion of the search | Examiner |
|---|---|---|
| The Hague | 9 October 2025 | Toader, Elena Lidia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 25 17 7921

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| US 2021342134 A1 | 04-11-2021 | CN 113568663 A<br>EP 3905034 A1<br>US 2021342134 A1 | 29-10-2021<br>03-11-2021<br>04-11-2021 |
| WO 2024030707 A1 | 08-02-2024 | EP 4384919 A1<br>KR 20250047643 A<br>US 2024264949 A1<br>WO 2024030707 A1 | 19-06-2024<br>04-04-2025<br>08-08-2024<br>08-02-2024 |
| EP 2972896 B1 | 02-05-2018 | CN 105378683 A<br>EP 2972896 A1<br>US 2014281352 A1<br>WO 2014143055 A1 | 02-03-2016<br>20-01-2016<br>18-09-2014<br>18-09-2014 |

EPO FORM P0459

For more details about this annex : see Official Journal of the European Patent Office, No. 12/82